(19) Europäisches Patentamt
European Patent Office
Office européen des brevets

(11) EP 4 232 510 B1

(12) EUROPEAN PATENT SPECIFICATION

(45) Date of publication and mention of the grant of the patent:
**29.01.2025 Bulletin 2025/05**

(21) Application number: **21791305.2**

(22) Date of filing: **11.10.2021**

(51) International Patent Classification (IPC):
***C08L 23/06*** *(2006.01)*

(52) Cooperative Patent Classification (CPC):
(C-Sets available)
**C08L 23/06;** C08L 2205/025; C08L 2207/062
(Cont.)

(86) International application number:
**PCT/EP2021/078019**

(87) International publication number:
**WO 2022/084081 (28.04.2022 Gazette 2022/17)**

(54) **POLYMER COMPOSITION FOR INJECTION MOLDING**
POLYMERZUSAMMENSETZUNG ZUM SPRITZGIESSEN
COMPOSITION POLYMÈRE POUR MOULAGE PAR INJECTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.10.2020 EP 20203367**

(43) Date of publication of application:
**30.08.2023 Bulletin 2023/35**

(73) Proprietor: **Basell Poliolefine Italia S.r.l.**
**20121 Milano (IT)**

(72) Inventors:
- **MUSACCHI, Gianluca**
**44122 Ferrara (IT)**
- **MARCHINI, Roberta**
**44122 Ferrara (IT)**
- **DI PIETRO, Fabio**
**44122 Ferrara (IT)**

(74) Representative: **LyondellBasell**
**c/o Basell Poliolefine Italia**
**Intellectual Property**
**P.le Donegani 12**
**44122 Ferrara (IT)**

(56) References cited:
**EP-A1- 3 266 824**
**WO-A1-2011/061087**
**WO-A1-2020/201084**
**WO-A2-2004/014997**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 23/06, C08L 23/20;**
**C08L 23/06, C08L 23/20, C08L 23/20**

## Description

FIELD OF THE INVENTION

The present disclosure relates to a polymer composition for injection molding, comprising an ethylene polymer and low amounts of a butene-1 polymer having a very high melt flow rate value.

The incorporation of said butene-1 polymer allows to achieve an improved melt flowability in the injection molding process, while enhancing some mechanical properties of the ethylene polymer.

BACKGROUND OF THE INVENTION

Injection molding is commonly used for producing various kinds of polymer articles, in particular those having a complex shape.

Polyolefins, including polyethylene, are the most widely used plastics for injection molding.

In the injection molding process, heat and pressure are applied to the polymer, causing it to melt and flow. The melt is injected under high pressure into the mold.

Pressure is maintained on the material in the cavity until it cools and solidifies. When the temperatures have been reduced sufficiently below the polymer's distortion temperature, the mold opens and the molded article is ejected.

It is thus evident that in a polyolefin designed for injection molding, a high melt flowability is required, in order to obtain a high and consistent quality of the final articles with viable pressure and temperature conditions and to reduce the cycle time.

In the case of polyethylene, such effect is achieved by properly setting the molecular weights and the molecular weight distribution, but there is a continuous effort to obtain the best possible melt flowability under the injection molding process conditions, without reducing the mechanical properties.

Paraffinic waxes, such as Fischer-Tropsch waxes, are often used as additives to improve melt flowability of polyethylene in the injection molding process.

However, when the waxes are added to polyethylene in amounts over about 2% by weight, it becomes increasingly difficult to obtain a homogeneous blend, so that the improvement in melt flowability is limited.

Moreover, the final mechanical properties are generally worsened.

While it is already known to add low amounts of butene-1 polymers to polyethylene for the preparation of pipes, films and fibers, as reported in WO2010025918 and WO2007082817, the use of butene-1 polymers as processing aids in compositions for injection molding is not contemplated in the art. WO2011061087 discloses polyolefin compositions for injection moulding, which compositions comprise also a butene-1 polymer, however, having relatively low melt flow rates.

It has now been found that by adding a butene-1 polymer with a very high melt flow rate value to an ethylene polymer, it is possible to obtain a polymer composition for injection molding with an unexpected profile of properties.

SUMMARY OF THE INVENTION

Thus the present disclosure provides a polymer composition comprising:

A) from 88% to 99% by weight, preferably from 90% to 98.5% by weight, more preferably from 92% to 98.5% by weight, of an ethylene polymer having MIP of equal to or higher than 5 g/10 min., preferably equal to or higher than 6 g/10 min., more preferably equal to or higher than 8 g/10 min., where MIP is the melt flow index at 190°C with a load of 5 kg, determined according to 1133-2:2011;

B) from 1% to 12% by weight, preferably from 1.5% to 10% by weight, more preferably from 1.5% to 8% by weight, of a butene-1 polymer having MIE of equal to or higher than 800 g/10 min., preferably equal to or higher than 1000 g/10 min., in particular from 800 to 3000 g/10 min. or from 1000 to 3000 g/10 min., where MIE is the melt flow index at 190°C with a load of 2.16 kg, determined according to 1133-2:2011;

wherein the amounts of A) and B) are referred to the total weight of A) + B).

The said composition has high values of melt flowability, measured as spiral length, and of impact resistance, measured as Charpy impact strength.

DETAILED DESCRIPTION OF THE INVENTION

As used herein, the expression "ethylene polymer" includes polymers selected from ethylene homopolymers and ethylene copolymers containing alpha-olefin comonomers different from ethylene, having preferably from 3 to 8 carbon atoms (preferably in amounts from 1% to 10% by weight with respect to the total weight of the copolymer) and their

mixtures. Examples of the said alpha-olefin comonomers having from 3 to 8 carbon atoms are propylene, butene-1, pentene-1, hexene-1, octene-1 and 4-methylpentene-1.

Butene-1 and hexene-1 are preferred.

The expression "ethylene polymer" is also intended to embrace, as alternatives, both a polymer consisting of a single component, such kind of polymer being called "monomodal" polymer in the art, and a polymer (polymer composition) comprising two or more ethylene polymer components, preferably with different molecular weights, thus a "bimodal" or "multimodal" polymer.

As used herein, the expression "butene-1 polymer" includes polymers selected from butene-1 homopolymers and copolymers of butene-1 containing alpha-olefin comonomers different from butene-1, preferably selected from ethylene, propylene, alpha-olefins having from 5 to 10 carbon atoms and mixtures thereof.

Ethylene is particularly preferred.

Examples of said alpha-olefins having from 5 to 10 carbon atoms are hexene-1 and octene-1.

The expression "butene-1 polymer" is also intended to embrace, as alternatives, both a polymer consisting of a single component and a polymer (polymer composition) comprising two or more butene-1 polymer components, preferably with different amounts of comonomers.

Particularly preferred amounts of A) and B) are:

- from 88% to 97% by weight of A) and from 3% to 12% by weight of B), or
- from 90% to 97% by weight of A) and from 3% to 10% by weight of B), or
- from 92% to 97% by weight of A) and from 3% to 8% by weight of B);

wherein all the amounts of A) and B) are referred to the total weight of A) + B).

Preferred values of density for the ethylene polymer A) are from 0.930 to 0.970 g/cm$^3$, in particular from 0.940 to 0.965 g/cm$^3$, measured according to ISO 1183-1:2012 at 23°C.

Particularly preferred values of MIP for the ethylene polymer A) are:

- from 5 to 20 g/10 min., or
- from 5 to 15 g/10 min., or
- from 6 to 20 g/10 min., or
- from 6 to 15 g/10 min., or
- from 8 to 20 g/10 min., or
- from 8 to 15 g/10 min.

Optionally, the ethylene polymer A) may have at least one of the following further additional features:

- a MIF value from 50 to 200 g/10 min., or from 50 to 150 g/10 min., preferably from 60 to 200 g/10 min., or from 60 to 150 g/10 min., more preferably from 80 to 200 g/10 min., or from 80 to 150 g/10 min., where MIF is the melt flow index at 190°C with a load of 21.60 kg, determined according to ISO 1133-2:2011;
- a MIE value from 1 to 10 g/10 min., or from 1 to 8 g/10 min., preferably from 2 to 10 g/10 min., or from 2 to 8 g/10 min.;
- a ratio MIF/MIP of equal to or higher than 5, in particular from 5 to 20 or from 5 to 15;
- a ratio MIF/MIE of equal to or higher than 20, in particular from 20 to 40 or from 20 to 35.

The present ethylene polymer A) is available on the market. It belongs to the family of the polymers (homo- and copolymers) that can be obtained by way of polymerization processes in the presence of coordination catalysts. Said processes and the polymers obtained from them are widely described in the art.

In particular it is possible to carry out the polymerization process in the presence of a Ziegler-Natta catalyst.

As known, the Ziegler-Natta polymerization catalysts comprise the reaction product of an organic compound of a metal of Groups I-III of the Periodic Table (for example, an aluminum alkyl), and an inorganic compound of a transition metal of Groups IV-VIII of the Periodic Table (for example, a titanium halide), preferably supported on a Mg halide. The polymerization conditions to be used with such catalysts generally are well known also.

The said polymerization can be carried out in a single step, to prepare a monomodal ethylene polymer, or in two or more steps under different polymerization conditions, to prepare a multimodal ethylene polymer.

The present butene-1 polymer B) preferably has a Brookfield viscosity at 190°C of from 1500 to 20000 mPa·sec, in particular from 2000 to 15000 mPa·sec, or from 2500 to 10000 mPa·sec.

In one embodiment, the butene-1 polymer B) may be a copolymer having a copolymerized comonomer content, in particular a copolymerized ethylene content, of from 0.5% to 4.0% by mole, preferably of from 0.7% to 3.5% by mole.

In one further embodiment, the butene-1 polymer B) may be a butene-1 copolymer composition comprising:

B1) a butene-1 homopolymer or a copolymer of butene-1 with at least one comonomer selected from ethylene, propylene, alpha-olefins having from 5 to 10 carbon atoms and mixtures thereof, having a copolymerized comonomer content ($C_{A1}$) of up to 2% by mole;

B2) a copolymer of butene-1 with at least one comonomer selected from ethylene, propylene, alpha-olefins having from 5 to 10 carbon atoms and mixtures thereof, having a copolymerized comonomer content ($C_{A2}$) of from 3 to 5% by mole;

said composition having a total copolymerized comonomer content of 0.5 - 4.0% by mole, preferably of from 0.7 to 3.5% by mole referred to the sum of B1) + B2).

The relative amounts of B1) and B2) may range from 10% to 40% by weight, in particular from 15% to 35% by weight of B1) and from 90% to 60% by weight, in particular from 85% to 65% by weight of B2), said amounts being referred to the sum of B1) + B2).

Highly preferred MIP values for the butene-1 polymer B) are equal to or higher than 1800 g/10 min., in particular from 1800 to 3000 g/10 min.

Preferably, the butene-1 polymer B) may have at least one of the following additional features:

a) a molecular weight distribution (Mw/Mn) lower than 4, preferably lower than 3; more preferably lower than 2.5, the lower limit being preferably of 1.5 in all cases;

b) melting point (TmII) lower than 110°C, preferably lower than 100°C, more preferably lower than 90°C;

c) melting point (TmII) higher than 80°C;

d) glass transition temperature (Tg) in the range from - 40°C to - 10°C, preferably from -30°C to -10°C;

e) isotactic pentads (mmmm) measured with $^{13}$C-NMR operating at 150.91 MHz higher than 90%; in particular higher than 93% or higher than 95%;

f) 4,1 insertions not detectable using a $^{13}$C-NMR operating at 150.91 MHz;

g) X-ray crystallinity of from 25 to 65%.

Optionally, the butene-1 polymer B) may have at least one of the following further additional features:

i) intrinsic viscosity (IV) measured in tetrahydronaphtalene (THN) at 135°C equal to or lower than 0.6 dl/g, preferably comprised between 0.2 and 0.6 dl/g;

ii) Mw equal to or greater than 30.000 g/mol, in particular from 30.000 to 100.000 g/mol;

iii) a density of 0.885-0.925 g/cm$^3$, in particular of 0.890-0.920 g/cm$^3$;

The butene-1 polymer B) can be obtained by polymerizing the monomer(s) in the presence of a metallocene catalyst system obtainable by contacting:

- a stereorigid metallocene compound;
- an alumoxane or a compound capable of forming an alkyl metallocene cation; and, optionally,
- an organo aluminum compound.

Preferably the stereorigid metallocene compound belongs to the following formula (I):

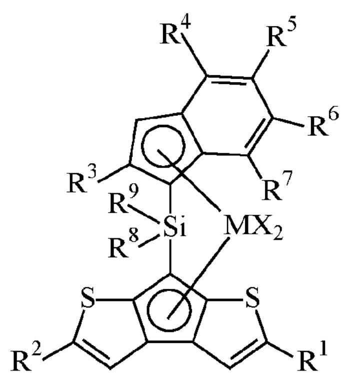

wherein:

M is an atom of a transition metal selected from those belonging to group 4; preferably M is zirconium;

X, equal to or different from each other, is a hydrogen atom, a halogen atom, a R, OR, OR'O, $OSO_2CF_3$, OCOR, SR, $NR_2$ or $PR_2$ group wherein R is a linear or branched, saturated or unsaturated $C_1$-$C_{20}$-alkyl, $C_3$-$C_{20}$-cycloalkyl, $C_6$-$C_{20}$-aryl, $C_7$-$C_{20}$-alkylaryl or $C_7$-$C_{20}$-arylalkyl radical, optionally containing heteroatoms belonging to groups 13-17 of the Periodic Table of the Elements; and R' is a $C_1$-$C_{20}$-alkylidene, $C_6$-$C_{20}$-arylidene, $C_7$-$C_{20}$-alkylarylidene, or $C_7$-$C_{20}$-arylalkylidene radical; preferably X is a hydrogen atom, a halogen atom, a OR'O or R group; more preferably X is chlorine or a methyl radical;

$R^1$, $R^2$, $R^5$, $R^6$, $R^7$, $R^8$ and $R^9$, equal to or different from each other, are hydrogen atoms, or linear or branched, saturated or unsaturated $C_1$-$C_{20}$-alkyl, $C_3$-$C_{20}$-cycloalkyl, $C_6$-$C_{20}$-aryl, $C_7$-$C_{20}$-alkylaryl or $C_7$-$C_{20}$-arylalkyl radicals, optionally containing heteroatoms belonging to groups 13-17 of the Periodic Table of the Elements; or $R^5$ and $R^6$, and/or $R^8$ and $R^9$ can optionally form a saturated or unsaturated, 5 or 6 membered rings, said ring can bear $C_1$-$C_{20}$ alkyl radicals as substituents; with the proviso that at least one of $R^6$ or $R^7$ is a linear or branched, saturated or unsaturated $C_1$-$C_{20}$-alkyl radical, optionally containing heteroatoms belonging to groups 13-17 of the Periodic Table of the Elements; preferably a $C_1$-$C_{10}$-alkyl radical;

$R^3$ and $R^4$, equal to or different from each other, are linear or branched, saturated or unsaturated $C_1$-$C_{20}$-alkyl radicals, optionally containing heteroatoms belonging to groups 13-17 of the Periodic Table of the Elements; preferably $R^3$ and $R^4$ equal to or different from each other are $C_1$-$C_{10}$-alkyl radicals; more preferably $R^3$ is a methyl, or ethyl radical; and $R^4$ is a methyl, ethyl or isopropyl radical.

Preferably the compounds of formula (I) have formula (Ia):

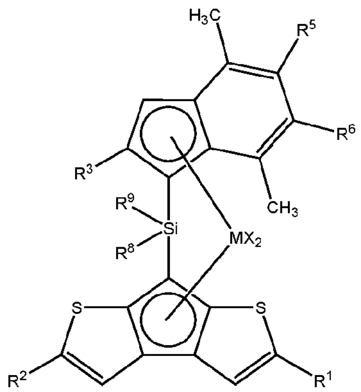

(Ia)

Wherein:

M, X, $R^1$, $R^2$, $R^5$, $R^6$, $R^8$ and $R^9$ have been described above;

$R^3$ is a linear or branched, saturated or unsaturated $C_1$-$C_{20}$-alkyl radical, optionally containing heteroatoms belonging to groups 13-17 of the Periodic Table of the Elements; preferably $R^3$ is a $C_1$-$C_{10}$-alkyl radical; more preferably $R^3$ is a methyl, or ethyl radical.

Specific examples of metallocene compounds are dimethylsilyl{(2,4,7-trimethyl-1-indenyl)-7-(2,5-dimethyl-cyclopenta[1,2-b:4,3-b']-dithiophene)} zirconium dichloride; dimethylsilanediyl{(1-(2,4,7-trimethylindenyl)-7-(2,5-dimethyl-cyclopenta[1,2-b:4,3-b']-dithiophene)}Zirconium dichloride and dimethylsilanediyl{(1-(2,4,7-trimethylindenyl)-7-(2,5-dimethyl-cyclopenta[1,2-b:4,3-b']-dithiophene)}zirconium dimethyl.

Examples of alumoxanes are methylalumoxane (MAO), tetra-(isobutyl)alumoxane (TIBAO), tetra-(2,4,4-trimethyl-pentyl)alumoxane (TIOAO), tetra-(2,3-dimethylbutyl)alumoxane (TDMBAO) and tetra-(2,3,3-trimethylbutyl)alumoxane (TTMBAO).

Examples of compounds able to form an alkylmetallocene cation are compounds of formula $D^+E^-$, wherein $D^+$ is a Brønsted acid, able to donate a proton and to react irreversibly with a substituent X of the metallocene of formula (I) and $E^-$ is a compatible anion, which is able to stabilize the active catalytic species originating from the reaction of the two compounds, and which is sufficiently labile to be able to be removed by an olefinic monomer. Preferably, the anion $E^-$ comprises of one or more boron atoms.

Examples organo aluminum compound are trimethylaluminum (TMA), triisobutylaluminium (TIBA), tris(2,4,4-trimethyl-pentyl)aluminum (TIOA), tris(2,3-dimethylbutyl)aluminium (TDMBA) and tris(2,3,3-trimethylbutyl)aluminum (TTMBA).

Examples of the said catalyst system and of polymerization processes employing such catalyst system can be

found in WO2004099269 and WO2009000637.

The polymerization process can be carried out with the said catalysts by operating in liquid phase, optionally in the presence of an inert hydrocarbon solvent, or in gas phase, using fluidized bed or mechanically agitated gas phase reactors.

The hydrocarbon solvent can be either aromatic (such as toluene) or aliphatic (such as propane, hexane, heptane, isobutane, cyclohexane and 2,2,4-trimethylpentane, isododecane).

Preferably, the polymerization process is carried out by using liquid butene-1 as polymerization medium. The polymerization temperature can be from 20°C to 150°C, in particular between 50°C and 90°C, for example from 65°C to 82°C.

The concentration of hydrogen in the liquid phase during the polymerization reaction (molar ppm $H_2$/ butene-1 monomer) is generally from 1800 ppm to 6000 ppm, in particular from 1900 ppm to 5500 ppm.

When the present butene-1 polymer comprises the previously said two components B1) and B2), these can be prepared separately and then blended together in the molten state by using known polymer processing apparatuses, such as mono- and twin screw extruders.

However, the present butene-1 polymer comprising said components can be prepared directly in polymerization.

The polymerization process thus comprises in this case at least two sequential stages, carried out in two or more reactors connected in series, wherein components B1) and B2) are prepared in separate subsequent stages, operating in each stage, except for the first stage, in the presence of the polymer formed and the catalyst used in the preceding stage.

The catalyst can be added in the first reactor only, or in more than one reactor.

Specific examples of butene-1 polymers B) having MIE of equal to or higher than 800 g/10 min. are disclosed in WO2006045687, WO2018007279, WO2018007280, WO2020016143 and WO2020016144.

The present polymer composition can be prepared by melting and blending the components, and the blending is effected in a blending apparatus at temperatures generally of from 180 to 310°C, preferably from 190 to 280°C, more preferably from 200 to 250°C. Any known apparatus and technology can be used for this purpose.

Useful melt-blending apparatuses in this context are in particular extruders or kneaders, and particular preference is given to twin-screw extruders. It is also possible to premix the components at room temperature in a mixing apparatus.

The present polymer composition in form of the premixed components can also be directly fed to the processing equipment used to prepare the final article, thus omitting a previous melt blending step.

During the preparation of the polymer composition, besides the components A) and B) and other optional polymer components, it is possible to introduce additives commonly employed in the art, such as stabilizing agents (against heat, light, U.V.), plasticizers, antiacids, antistatic and water repellant agents, pigments.

As previously mentioned, the present polymer composition has high values of impact resistance.

In particular it preferably has at least one of the following:

- a Charpy at 23 °C of from 5 to 70 kJ/$m^2$;
- a Charpy at 0 °C of from 4 to 50 kJ/$m^2$;
- a Charpy at -20 °C of from 2 to 40 kJ/$m^2$;

said Charpy values being measured according to ISO 179/1eA, 48 hours after molding.

The present polymer composition has also relatively low flexural modulus values, which are preferably lower than the flexural modulus of component A), translating into an improved flexibility.

In particular the present polymer composition has preferably a flexural modulus of from 500 to 1000 MPa, more preferably from 500 to 900 MPa, measured according to norm ISO 178:2019, 48 hours after molding.

The present polymer composition can be processed on conventional injection molding machines. The finish on the articles obtained is homogeneous and can be improved further by increasing the rate of injection or raising the mold temperature.

Due to the high melt flowability, it can also be used for preparing extruded articles, in particular for cable covering by extrusion.

Thus the present disclosure also provides an injection molded or extruded article comprising the present polymer composition.

EXAMPLES

Various embodiments, compositions and methods as provided herein are disclosed below in the following examples. These examples are illustrative only, and are not intended to limit the scope of the invention.

The following analytical methods are used to characterize the polymer compositions.

MIF, MIE and MIP

Determined according to norm ISO 1133-2:2011 at 190°C with the specified load.

Density

Measured according to ISO 1183-1:2012 at 23°C.

Brookfield viscosity

Measured at 190°C by means of a Cylindrical Spindle Rotational Viscometer HA Ametek/Benelux Scientific model DV2T, equipped with a drive motor capable of variable testing speed and a set of spindles capable of achieving and maintaining a torque at about 80%.

The selected spindle/chamber combination was SC4-27 / SC4-13R/RP.

During the test, the sample was subjected to a stepwise rotation increase until a torque value of around 80% was reached and maintained. Rotation started at 10 RPM then increased stepwise by 2 RPM every 5 seconds.

The Brookfield viscosity, expressed in mPa*s, was calculated as Shear Stress (mPa) / Shear Rate (sec-1) ratio and was determined by averaging the results obtained during the last 20 minutes of acquisition (1 datapoint / minute).

Intrinsic viscosity (IV)

Determined according to norm ASTM D 2857 in tetrahydronaphthalene at 135 °C.

Comonomer contents

Component A)

The comonomer content was determined by means of IR in accordance with ASTM D 6248 98, using an FT-IR spectrometer Tensor 27 from Bruker.

Component B)

Comonomer contents were determined via FT-IR.

The spectrum of a pressed film of the polymer was recorded in absorbance vs. wavenumbers ($cm^{-1}$). The following measurements were used to calculate the ethylene content:

a) area (At) of the combination absorption bands between 4482 and 3950 $cm^{-1}$ which is used for spectrometric normalization of film thickness.

b) factor of subtraction ($FCR_{C2}$) of the digital subtraction between the spectrum of the polymer sample and the absorption band due to the sequences BEE and BEB (B: 1,butene units, E: ethylene units) of the methylenic groups ($CH_2$ rocking vibration).

c) Area ($A_{C2,block}$) of the residual band after subtraction of the $C_2$PB spectrum. It comes from the sequences EEE of the methylenic groups ($CH_2$ rocking vibration).

APPARATUS

A Fourier Transform Infrared spectrometer (FTIR) was used,which is capable of providing the spectroscopic measurements above reported.

A hydraulic press with platens heatable to 200 °C (Carver or equivalent) was used.

METHOD

Calibration of (BEB + BEE) sequences

A calibration straight line is obtained by plotting %(BEB + BEE)wt vs. $FCR_{C2}/A_t$. The slope $G_r$ and the intercept $I_r$ are calculated from a linear regression.

Calibration of EEE sequences

A calibration straight line is obtained by plotting %(EEE)wt vs. $A_{C2,block}/A_t$. The slope $G_H$ and the intercept $I_H$ are calculated from a linear regression.

Sample preparation

Using a hydraulic press, a thick sheet was obtained by pressing about g 1.5 of sample between two aluminum foils. If homogeneity is in question, a minimum of two pressing operations are recommended. A small portion was cut from this sheet to mold a film. Recommended film thickness ranges between 0.1-0.3 mm.
The pressing temperature was 140 ± 10 °C.
A crystalline phase modification takes place with time, therefore it is recommended to collect the IR spectrum of the sample film as soon as it is molded.

Procedure

The instrument data acquisition parameters were as follows:

Purge time: 30 seconds minimum.
Collect time: 3 minutes minimum.
Apodization: Happ-Genzel.
Resolution: 2 $cm^{-1}$.
Collect the IR spectrum of the sample vs. an air background.

CALCULATION

Calculate the concentration by weight of the BEE + BEB sequences of ethylene units:

$$\%(BEE + BEB)wt = G_r \cdot \frac{FCR_{C2}}{A_t} + I_r$$

Calculate the residual area (AC2,block) after the subtraction described above, using a baseline between the shoulders of the residual band.
Calculate the concentration by weight of the EEE sequences of ethylene units:

$$\%(EEE)wt = G_H \cdot \frac{A_{C2,\,block}}{A_t} + I_H$$

Calculate the total amount of ethylene percent by weight:

$$\%C2wt = \left[\%(BEE + BEB)wt + \%(EEE)wt\right]$$

Thermal properties (melting temperatures and enthalpies)
Determined by Differential Scanning Calorimetry (D S C.) on a Perkin Elmer DSC-7 instrument, as hereinafter described.

- For the determination of TmII (the melting temperature measured in the second heating run) a weighted sample (5-10 mg) obtained from the polymerization was sealed into aluminum pans and heated at 200 °C with a scanning speed corresponding to 10 °C/minute. The sample was kept at 200 °C for 5 minutes to allow a complete melting of all the crystallites thus cancelling the thermal history of the sample. Successively, after cooling to -20 °C with a scanning speed corresponding to 10 °C/minute, the peak temperature was taken as the crystallization temperature (Tc). After standing for 5 minutes at -20 °C, the sample was heated for the second time at 200 °C with a scanning speed corresponding to 10 °C/min. In this second heating run, the peak temperature measured was taken as (TmII). If more than one peak was present, the highest (most intense) one was taken as TmII. The area under the peak (or peaks) was taken as global melting enthalpy (DH TmII).
- The melting enthalpy and the melting temperature were also measured after aging (without cancelling the thermal history) as follows by using Differential Scanning Calorimetry (D.S.C.) on an Perkin Elmer DSC-7 instrument. A weighted sample (5-10 mg) obtained from the polymerization was sealed into aluminum pans and heated at 200°C with a scanning speed corresponding to 10 °C/minute. The sample was kept at 200 °C for 5 minutes to allow a complete melting of all the crystallites. The sample was then stored for 10 days at room temperature. After 10 days the sample was subjected to DSC, cooled to -20 °C, and then it was heated at 200°C with a scanning speed corresponding

to 10°C/min. In this heating run, the peak temperature was taken as the melting temperature (Tml). If more than one peak was present, the highest (most intense) peak was taken as Tml. The area under the peak (or peaks) was taken as global melting enthalpy after 10 days (DH Tml).

NMR analysis of chain structure

$^{13}C$ NMR spectra were acquired on a Bruker AV-600 spectrometer equipped with cryo-probe, operating at 150.91 MHz in the Fourier transform mode at 120°C.

The peak of the $T_{\beta\delta}$ carbon (nomenclature according to C. J. Carman, R. A. Harrington and C. E. Wilkes, Macromolecules, 10, 3, 536 (1977)) was used as internal reference at 37.24 ppm. The samples were dissolved in 1,1,2,2-tetrachloroethane-*d2* at 120°C with a 8 % wt/v concentration. Each spectrum was acquired with a 90° pulse, 15 seconds of delay between pulses and CPD to remove $^{1}H$-$^{13}C$ coupling. About 512 transients were stored in 32K data points using a spectral window of 9000 Hz.

The assignments of the spectra, the evaluation of triad distribution and the composition were made according to Kakugo [M. Kakugo, Y. Naito, K. Mizunuma and T. Miyatake, Macromolecules, 16, 4, 1160 (1982)] and Randall [J. C. Randall, Macromol. Chem Phys., C30, 211 (1989)] using the following:

$$BBB = 100\ (T_{\beta\beta})/S = I5$$

$$BBE = 100T_{\beta\delta}/S = I4$$

$$EBE = 100\ P_{\delta\delta}\ /S = I14$$

$$BEB = 100\ S_{\beta\beta}/S = I13$$

$$BEE= 100\ S_{\alpha\delta}/S = I7$$

$$EEE = 100(0.25\ S_{\gamma\delta}+0.5\ S_{\delta\delta})/S = 0.25\ I9+ 0.5I10$$

| Area | Chemical Shift | Assignments | Sequence |
|---|---|---|---|
| 1 | 40.40-40.14 | Sαα | BBBB |
|  | 39.64 | Tδδ | EBE |
| 2 | 39-76-39.52 | Sαα | BBBE |
| 3 | 39.09 | Sαα | EBBE |
| 4 | 37.27 | Tβδ | BBE |
| 5 | 35.20-34.88 | Tββ | BBB |
| 6 | 34.88-34.49 | Sαγ | BBEB+BEBE |
| 7 | 34.49-34.00 | Sαδ | EBEE+BBEE |
| 8 | 30.91 | Sγγ | BEEB |
| 9 | 30.42 | Sγδ | BEEE |
| 10 | 29.90 | Sδδ | EEE |
| 11 | 27.73-26.84 | Sβδ+2$B_2$ | BBB+BBE EBEE+BBEE |
| 12 | 26.70 | 2$B_2$ | EBE |
| 13 | 24.54-24.24 | Sββ | BEB |
| 14 | 11.22 | Pδδ | EBE |
| 15 | 11.05 | Pβδ | BBE |

(continued)

| Area | Chemical Shift | Assignments | Sequence |
|---|---|---|---|
| 16 | 10.81 | Pββ | BBB |

To a first approximation, the *mmmm* was calculated using 2B2 carbons as follows:

| Area | Chemical shift | assignments |
|---|---|---|
| B1 | 28.2 -27.45 | *mmmm* |
| B2 | 27.45 - 26.30 | |

$$mmmm = B_1*100/(B_1+B_2-2*A_4-A_7-A_{14})$$

Molecular weights determination by GPC

Measured by way of Gel Permeation Chromatography (GPC) in 1,2,4-trichlorobenzene (TCB). Molecular weight parameters (Mn, Mw) and molecular weight distributions Mw/Mn for all the samples were measured by using a GPC-IR apparatus by PolymerChar, which was equipped with a column set of four PLgel Olexis mixed-bed (Polymer Laboratories) and an IR5 infrared detector (PolymerChar). The dimensions of the columns were 300 × 7.5 mm and their particle size was 13 $\mu$m. The mobile phase flow rate was kept at 1.0 mL/min. All the measurements were carried out at 150 °C. Solution concentrations were 2.0 mg/mL (at 150 °C) and 0.3 g/L of 2,6-diterbuthyl-*p*-chresole were added to prevent degradation. For GPC calculation, a universal calibration curve was obtained using 12 polystyrene (PS) standard samples supplied by PolymerChar (peak molecular weights ranging from 266 to 1220000). A third-order polynomial fit was used for interpolate the experimental data and obtain the relevant calibration curve. Data acquisition and processing was done by using Empower 3 (Waters). The Mark-Houwink relationship was used to determine the molecular weight distribution and the relevant average molecular weights: the *K* values were $K_{PS} = 1.21 \times 10^{-4}$ dL/g and $K_{PB} = 1.78 \times 10^{-4}$ dL/g for PS and polybutene (PB) respectively, while the Mark-Houwink exponents $\alpha = 0.706$ for PS and $\alpha = 0.725$ for PB were used.

For butene/ethylene copolymers, as far as the data evaluation is concerned, it was assumed for each sample that the composition was constant in the whole range of molecular weight and the *K* value of the Mark-Houwink relationship was calculated using a linear combination as reported below:

$$K_{EB} = x_E K_{PE} + x_B K_{PB}$$

where $K_{EB}$ is the constant of the copolymer, $K_{PE}$ ($4.06 \times 10^{-4}$, dL/g) and $K_{PB}$ ($1.78 \times 10^{-4}$ dL/g) are the constants of polyethylene (PE) and PB, $x_E$ and $x_B$ are the ethylene and the butene weight relative amount with $x_E + x_B = 1$. The Mark-Houwink exponents $\alpha = 0.725$ was used for all the butene/ethylene copolymers independently on their composition. End processing data treatment was fixed for all samples to include fractions up at 1000 in terms of molecular weight equivalent. Fractions below 1000 were investigated via GC.

Determination of X-ray crystallinity

The X-ray crystallinity was measured with an X-ray Diffraction Powder Diffractometer (XDPD) that uses the Cu-Kα1 radiation with fixed slits and able to collect spectra between diffraction angle 2Θ = 5° and 2Θ = 35° with step of 0.1° every 6 seconds.

The samples were diskettes of about 1.5-2.5 mm of thickness and 2.5-4.0 cm of diameter made by compression moulding. The diskettes were aged at room temperature (23°C) for 96 hours.

After this preparation the specimen was inserted in the XDPD sample holder. The XRPD instrument set in order to collect the XRPD spectrum of the sample from diffraction angle 2Θ = 5° to 2Θ = 35° with steps of 0.1° by using counting time of 6 seconds, and at the end the final spectrum was collected.

Defining Ta as the total area between the spectrum profile and the baseline expressed in counts/sec·2Θ and Aa as the total amorphous area expressed in counts/sec·2Θ, Ca is total crystalline area expressed in counts/sec·2Θ.

The spectrum or diffraction pattern was analyzed in the following steps:

1) define a suitable linear baseline for the whole spectrum and calculate the total area (Ta) between the spectrum

profile and the baseline;
2) define a suitable amorphous profile, along the whole spectrum, that separate , the amorphous regions from the crystalline ones according to the two phase model;
3) calculate the amorphous area (Aa) as the area between the amorphous profile and the baseline;
4) calculate the crystalline area (Ca) as the area between the spectrum profile and the amorphous profile as Ca = Ta-Aa
5) Calculate the degree of crystallinity (%Cr) of the sample using the formula:

$$\%Cr = 100 \times Ca / Ta$$

Glass transition temperature via DMTA (Dynamic Mechanical Thermal Analysis)

Molded specimens of 76 mm by 13 mm by 1 mm were fixed to the DMTA machine for tensile stress. The frequency of the tension and relies of the sample was fixed at 1 Hz. The DMTA translates the elastic response of the specimen starting from -100 °C to 130 °C. In this way it is possible to plot the elastic response versus temperature. The elastic modulus for a viscoelastic material is defined as E=E'+iE". The DMTA can split the two components E' and E" by their resonance and plot E' vs temperature and E'/E" = tan (δ) vs temperature.
The glass transition temperature Tg was assumed to be the temperature at the maximum of the curve E'/E" = tan (δ) vs temperature.

Charpy impact strength

According to ISO 179/1eA at 23°C, 0°C and -20 °C, measured 48 hours after molding.

Flexural modulus

According to norm ISO 178:2019, measured 48 hours after molding.

Spiral flow test (spiral length)

The spiral flow test was carried out on a Ripress FL 170 HES apparatus equipped with a spiral mold having spiral thickness of 2.5 mm.
The tested polymer was injected into the cavity of the spiral mold through a 3 mm die, under the following conditions:

- a stock temperature of 230 °C;
- shot step excluded by setting injection by position = 0.1mm;
- a hydraulic holding pressure from 29 to 126 bar equivalent to a pressure on polymer material from 300 to 1220 bar;
- a screw diameter 50 mm;
- a mold temperature of 40 °C; and
- a closing pressure of 170 t.

The spiral length is the length of the solid polymer spiral extracted from the spiral mold after cooling.
The higher the spiral length, the easier the polymer is to process under the injection molding process conditions.

**Examples 1 - 6 and Comparative Examples 1 - 4**

The hereinafter described materials were used.

Ethylene polymer A)

High density polyethylene having density of 0.955 g/cm$^3$, MIP of 11.0 g/10 min., MIF of 105 g/10 min. and MIE of 4 g/10 min., sold by Basell with trademark Hostalen GD 7255 LS.

Butene-1 polymer B)

Two different polymers were used, namely butene-1 polymer B)-I and butene-1 polymer B)-II.

Butene-1 polymer B)-I

Prepared as reported hereinafter.

Preparation of the catalytic solution

Under nitrogen atmosphere, 6400 g of a 33 g/L solution of triisobutylaluminium (TIBA) in isododecane and 567 g of 30% wt/wt solution of methylalumoxane (MAO) in toluene were loaded in a 20 L jacketed glass reactor, stirred by means of an anchor stirrer, and allowed to react at room temperature for about 1 hour under stirring.

After this time, 1.27 g of metallocene dimethylsilyl{(2,4,7-trimethyl-l-indenyl)-7-(2,5-dimethyl-cyclopenta[l,2-b:4,3-b']-dithiophene)} zirconium dichloride, prepared according to Example 32 of WO0147939, was added and dissolved under stirring for about 30 minutes.

The final solution was discharged from the reactor into a cylinder through a filter to remove eventual solid residues.

The composition of the solution resulted to be:

| Al (wt.%) | Zr (wt.%) | Al/Zr (mol ratio) | metallocene conc. (mg/l) |
|---|---|---|---|
| 1.72 | 0.0029 | 2001 | 137 |

Polymerization

The polymerization was carried out in two stirred reactors operated in series, in which liquid butene-1 constituted the liquid medium. The catalyst solution described above was fed in both reactors. The polymerization conditions are reported in Table 1. The butene-1/ethylene copolymer was recovered as melt from the solution and cut in pellets. The copolymer was further characterized and the data are reported in Table 2.

Table 1

| | | |
|---|---|---|
| **First Reactor** | | |
| Temperature | °C | 75 |
| $H_2$ in liquid phase | molar ppm | 3248 |
| $C_2$- in liquid phase | wt.% | 0.3 |
| Mileage | Kg/gMe | 1485 |
| Split | wt.% | 60 |
| $C_2$- content | wt.% | 1 |
| $C_2$- content | mole% | 1.98 |
| **Second Reactor** | | |
| Temperature | °C | 75 |
| $H_2$ in liquid phase | molar ppm | 3248 |
| $C_2$- in liquid phase | wt.% | 0.4 |
| Split | wt.% | 40 |
| $C_2$- content | wt.% | 1 |
| $C_2$- content | mole% | 1.98 |
| | | |
| Total mileage | Kg/gMe | 1539 |
| Total $C_2$- content | wt.% | 1.0 |

(continued)

| Second Reactor | | |
|---|---|---|
| Total $C_2$- content | mole% | 1.98 |
| Note: Cz- = ethylene; kg/gMe = kilograms of polymer per gram of metallocene; Split = amount of polymer produced in the concerned reactor. | | |

Table 2

| | | |
|---|---|---|
| MFR (190°C/2.16 Kg) | g/10min. | 1200 |
| Intrinsic viscosity (IV) | dl/g | 0.4 |
| Mw/Mn | | 2.1 |
| TmII | °C | 81.9 |
| TmI | °C | 103 |
| Tg | °C | -13 |
| Brookfield Viscosity (180°C) | mPa.s | 6900 |
| Crystallinity (X-ray) | % | 58 |
| Density | g/cm$^3$ | 0.9090 |
| Flexural modulus | MPa | 350 |

Butene-1 polymer B)-II

Using the same catalytic solution and the same polymerization equipment as used for the preparation of the butene-1 polymer B)-I, the polymerization was carried out in the said two stirred reactors operated in series, in which liquid butene-1 constituted the liquid medium. The catalyst solution was injected in both reactors and the polymerization was carried out in continuous at a polymerization temperature of 75°C. The residence time in each reactor was in a range of 120÷200 min. The concentration of hydrogen during polymerization was 4900 ppm mol $H_2/(C_{4-})$ bulk, where $C_{4-}$ = butene-1. The comonomer was fed to the reactors in an amount of $C_{2-}/C_{4-}$ 0.35%wt. The ethylene comonomer was almost immediately copolymerized ($C_{2-}$ "stoichiometric" feed to the reactor). The catalyst yield (mileage) was of 2000 kg/g metallocene active component. The butene-1 copolymer was recovered as melt from the solution and cut in pellets. The copolymer was further characterized and the data are reported in Table 3.

Table 3

| | | |
|---|---|---|
| MFR | g/10min. | 2500 |
| $C_{2-}$ (IR) | wt.% | 1.1 |
| IV | dl/g | 0.34 |
| Mw/Mn | | 2.1 |
| TmII | °C | 83.5 |
| TmI | | 103 |
| Tg | °C | -13 |
| Brookfield Viscosity (180°C) | mPa.s | 3200 |
| Crystallinity (X-ray) | % | 55 |
| Density | g/cm$^3$ | 0.912 |
| Flexural Modulus | MPa | 300-350 |

Wax (comparative)

Fischer-Tropsch wax, having Drop melting point (measured according to ASTM D 3954) of 116°C, Penetration at

25°C (measured according to ASTM D 1321) of 0.1 mm and Brookfield viscosity at 135°C (measured according to method Sasol Wax 011) of 12 cP, sold by Sasol with trademark EnHance FG.

Preparation of the polymer compositions

**Examples 1 - 6**

The said butene-1 polymers B)-I and B)-II were blended with the ethylene polymer A) in the amounts reported in the following Table 4, wherein also the final properties of the resulting polymer compositions are reported.

**Comparative Examples 1 - 4**

In the following Table 5, Comparative Example 1 reports the properties of the ethylene polymer A) in pure state.

In Comparative Examples 2 - 4, the previously described Fischer-Tropsch wax was blended with the ethylene polymer A) in the amounts reported in Table 5, wherein also the final properties of the resulting polymer compositions are reported.

The amounts reported in Tables 4 and 5 are expressed in weight percent with respect to the total weight of the polymer composition.

The compositions of Examples 1-6 and Comparative Examples 2 - 4 were prepared by dry-mixing off-line the components and feeding them in the hopper of the injection molding equipment for the spiral flow test.

The melt blending step thus occurred in the said injection molding equipment.

Table 4

| | | Ex. 1 | Ex. 2 | Ex. 3 | Ex. 4 | Ex. 5 | Ex. 6 |
|---|---|---|---|---|---|---|---|
| B) - I | wt.% | 2% | 4% | 6% | - | - | - |
| B) - II | wt.% | - | - | - | 2% | 4% | 6% |
| Spiral Length at 300 bar | mm | 160 | 200 | 260 | 170 | 220 | 300 |
| Spiral Length at 500 bar | mm | 290 | 350 | 410 | 310 | 395 | 500 |
| Spiral Length at 720 bar | mm | 405 | 480 | 545 | 410 | 590 | 660 |
| Spiral Length at 1000 bar | mm | 520 | 610 | 770 | 540 | 660 | 820 |
| Spiral Length at 1220 bar | mm | 650 | 720 | 915 | 660 | 730 | 1080 |
| Charpy at 23 °C | $kJ/m^2$ | 9.5 | 16 | 42.8 | 9 | 28.1 | 45.5 |
| Charpy at 0 °C | $kJ/m^2$ | 8.6 | 12.6 | 40.5 | 9.9 | 13.3 | 28.6 |
| Charpy at -20 °C | $kJ/m^2$ | 5.2 | 11.7 | 23.5 | 6.7 | 12.8 | 17.2 |
| Flexural Modulus | MPa | 870 | 845 | 830 | 870 | 840 | 800 |

Table 5

| | | Comp. 1 | Comp. 2 | Comp. 3 | Comp. 4 |
|---|---|---|---|---|---|
| Wax | wt.% | - | 2% | 4% | 6% |
| Spiral Length at 300 bar | mm | 160 | 160 | 170 | 180 |
| Spiral Length at 500 bar | mm | 280 | 290 | 300 | 310 |
| Spiral Length at 720 bar | mm | 380 | 400 | 410 | 420 |
| Spiral Length at 1000 bar | mm | 510 | 530 | 540 | 550 |
| Spiral Length at 1220 bar | mm | 620 | 650 | 660 | 680 |
| Charpy at 23 °C | $kJ/m^2$ | 8.1 | 7 | 6.3 | 6.4 |
| Charpy at 0 °C | $kJ/m^2$ | 7.8 | 7.2 | 5.8 | 4.9 |
| Charpy at -20 °C | $kJ/m^2$ | 5.2 | 4.6 | 3.6 | 3.6 |

(continued)

| | | Comp. 1 | Comp. 2 | Comp. 3 | Comp. 4 |
|---|---|---|---|---|---|
| Flexural Modulus | MPa | 900 | 930 | 980 | 990 |

## Claims

1. A polymer composition comprising:

   A) from 88% to 99% by weight of an ethylene polymer having MIP of equal to or higher than 5 g/10 min., where MIP is the melt flow index at 190°C with a load of 5 kg, determined according to ISO 1133-2:2011;
   B) from 1% to 12% by weight of a butene-1 polymer having MIE of equal to or higher than 800 g/10 min., where MIE is the melt flow index at 190°C with a load of 2.16 kg, determined according to ISO 1133-2:2011;

   wherein the amounts of A) and B) are referred to the total weight of A) + B).

2. The composition according to claim 1, wherein the butene-1 polymer B) has a Brookfield viscosity at 190°C of from 1500 to 20000 mPa•sec.

3. The composition according to claim 1 or 2, wherein the butene-1 polymer B) is selected from butene-1 homopolymers and copolymers of butene-1 containing alpha-olefin comonomers different from butene-1.

4. The composition according to claim 3, wherein the butene-1 polymer B) has a copolymerized comonomer content of from 0.5% to 4.0% by mole.

5. The composition according to claim 1 or 2, wherein the butene-1 polymer B) has at least one of the following additional features:

   b) melting point (TmII) lower than 110°C;
   c) melting point (TmII) higher than 80°C.

6. The composition according to claim 1 or 2, wherein the ethylene polymer A) has a density of from 0.930 to 0.970 g/cm$^3$, measured according to ISO 1183-1:2012 at 23°C.

7. The composition according to claim 1 or 2, wherein the ethylene polymer A) has a MIF value from 50 to 200 g/10 min., where MIF is the melt flow index at 190°C with a load of 21.60 kg, determined according to ISO 1133-2:2011.

8. Article comprising the polyolefin composition of any of the preceding claims.

9. Article according to claim 8, which is an injection molded or an extruded article.

## Patentansprüche

1. Polymerzusammensetzung, umfassend:

   A) 88 Gew.% bis 99 Gew.% eines Ethylenpolymers mit einem MIP gleich oder größer als 5 g/10 min., wobei der MIP der Schmelzflussindex bei 190 °C unter einer Last von 5 kg ist, bestimmt gemäß ISO 1133-2:2011;
   B) 1 Gew.% bis 12 Gew.% eines Buten-1-Polymers mit einem MIE gleich oder größer als 800 g/10 min., wobei der MIE der Schmelzflussindex bei 190 °C unter einer Last von 2,16 kg ist, bestimmt gemäß ISO 1133-2:2011;

   wobei die Mengen von A) und B) sich auf das Gesamtgewicht von A) + B) beziehen.

2. Zusammensetzung nach Anspruch 1, wobei das Buten-1-Polymer B) eine Brookfield-Viskosität bei 190 °C von 1500 bis 20000 mPa•s hat.

3. Zusammensetzung nach Anspruch 1 oder 2, wobei das Buten-1-Polymer B) ausgewählt ist aus Buten-1-Homopolymeren und Copolymeren von Buten-1, die alpha-Olefincomonomere enthalten, die sich von Buten-1 unterscheiden.

4. Zusammensetzung nach Anspruch 3, wobei das Buten-1-Polymer B) einen Gehalt an copolymerisiertem Comonomer von 0,5 Mol.% bis 4,0 Mol.% hat.

5. Zusammensetzung nach Anspruch 1 oder 2, wobei das Buten-1-Copolymer B) mindestens eines der folgenden zusätzlichen Merkmale aufweist:

   b) einen Schmelzpunkt (TmII) unter 110 °C;
   c) einen Schmelzpunkt (TmII) über 80 °C.

6. Zusammensetzung nach Anspruch 1 oder 2, wobei das Ethylenpolymer A) eine Dichte von 0,930 bis 0,970 g/cm$^3$ hat, gemessen gemäß ISO 1183-1:2012 bei 23 °C.

7. Zusammensetzung nach Anspruch 1 oder 2, wobei das Ethylenpolymer A) einen MIF-Wert von 50 bis 200 g/10 min. hat, wobei der MIF der Schmelzflussindex bei 190 °C unter einer Last von 21,60 kg ist, bestimmt gemäß ISO 1133-2:2011.

8. Artikel, umfassend die Polyolefinzusammensetzung nach einem der vorhergehenden Ansprüche.

9. Artikel nach Anspruch 8, der ein spritzgegossener oder extrudierter Artikel ist.

**Revendications**

1. Composition polymère comprenant :

   A) 88 % à 99 % en poids d'un polymère d'éthylène présentant un MIP égal ou supérieur à 5 g/10 min, MIP étant l'indice de fluidité à chaud à 190 °C sous une charge de 5 kg, déterminé selon la norme ISO 1133-2:2011 ;
   B) 1 % à 12 % en poids d'un polymère de butène-1 présentant un MIE égal ou supérieur à 800 g/10 min, MIE étant l'indice de fluidité à chaud à 190 °C sous une charge de 2,16 kg, déterminé selon la norme ISO 1133-2:2011 ;

   les quantités de A) et B) se rapportant au poids total de A) + B).

2. Composition selon la revendication 1, le polymère de butène-1 B) présentant une viscosité selon Brookfield à 190 °C de 1500 à 20.000 mPa•sec.

3. Composition selon la revendication 1 ou 2, le polymère de butène-1 B) étant choisi parmi les homopolymères de butène-1 et les copolymères de butène-1 contenant des comonomères alpha-oléfiniques différents du butène-1.

4. Composition selon la revendication 3, le polymère de butène-1 B) présentant une teneur en comonomères copolymérisés de 0,5 % à 4,0 % en mole.

5. Composition selon la revendication 1 ou 2, le polymère de butène-1 B) présentant au moins l'une des caractéristiques supplémentaires suivantes :

   b) point de fusion (TmII) inférieur à 110°C ;
   c) point de fusion (TmII) supérieur à 80°C.

6. Composition selon la revendication 1 ou 2, le polymère d'éthylène A) présentant une masse volumique de 0,930 à 0,970 g/cm$^3$, mesurée selon la norme ISO 1183-1:2012 at 23 °C.

7. Composition selon la revendication 1 ou 2, le polymère d'éthylène A) présentant une valeur de MIF de 50 à 200 g/10 min, MIF étant l'indice de fluidité à chaud à 190 °C sous une charge de 21,60 kg, déterminé selon la norme ISO 1133-2:2011.

**8.** Article comprenant la composition polyoléfinique selon l'une quelconque des revendications précédentes.

**9.** Article selon la revendication 8, qui est un article moulé par injection ou extrudé.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2010025918 A
- WO 2007082817 A
- WO 2011061087 A
- WO 2004099269 A
- WO 2009000637 A
- WO 2006045687 A
- WO 2018007279 A
- WO 2018007280 A
- WO 2020016143 A
- WO 2020016144 A
- WO 0147939 A


### Non-patent literature cited in the description


- **C. J. CARMAN** ; **R. A. HARRINGTON** ; **C. E. WILKES**. *Macromolecules*, 1977, vol. 10 (3), 536
- **M. KAKUGO** ; **Y. NAITO** ; **K. MIZUNUMA** ; **T. MIYATAKE**. *Macromolecules*, 1982, vol. 16 (4), 1160
- **J. C. RANDALL**. *Macromol. Chem Phys.*, 1989, vol. C30, 211